(19) Europäisches Patentamt
European Patent Office
Office européen des brevets

(11) Publication number: **0 117 521**
**B1**

(12) # EUROPEAN PATENT SPECIFICATION

(45) Date of publication of patent specification: **24.06.87**

(51) Int. Cl.$^4$: **A 21 C 13/00,** A 21 D 8/02

(21) Application number: **84101846.8**

(22) Date of filing: **22.02.84**

(54) **Dough conditioning apparatus, in particular comprising an optimised temperature control to the conditioning chamber during the warming-up and rising.**

(30) Priority: **25.02.83 NL 8300708**

(43) Date of publication of application:
**05.09.84 Bulletin 84/36**

(45) Publication of the grant of the patent:
**24.06.87 Bulletin 87/26**

(84) Designated Contracting States:
**AT BE CH DE FR GB IT LI LU**

(56) References cited:
**DE-A-1 432 973**
**DE-A-1 432 975**
**DE-B-2 913 109**
**FR-A-2 123 788**
**FR-A-2 251 158**
**FR-A-2 332 709**
**FR-A-2 501 471**

(73) Proprietor: **MAJO FINANZ HOLDING S.A.**
**11 bd. Prince Henri**
**Luxembourg (LU)**

(72) The inventor has agreed to waive his entitlement to designation

(74) Representative: **Meyers, Ernest et al**
**Office de Brevets Freylinger & Associés 46 rue du Cimetière B.P. 1153**
**L-1011 Luxembourg (LU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 117 521 B1

## Description

The invention relates to a dough conditioning apparatus comprising a conditioning chamber for the pieces of dough to be conditioned, the conditioning comprising at least in sequence the rapid cooling of the pieces of dough loaded into the conditioning chamber, in order to stop the rise thereof, the keeping of the pieces of dough for a defined time at a defined temperature and the warming-up and causing to rise of the pieces of dough so that they may thereafter be baked, which dough conditioning apparatus is further provided with a cooling and heating unit associated with the conditioning chamber, an operating apparatus with at least a first and second temperature setting unit for respectively setting the keeping temperature and final temperature of the rise, and a temperature sensing unit associated with the conditioning chamber for at least sensing the air temperature in the conditioning chamber, and a control apparatus for at least controlling the cooling and heating unit at least in response to an output signal of the temperature sensing unit.

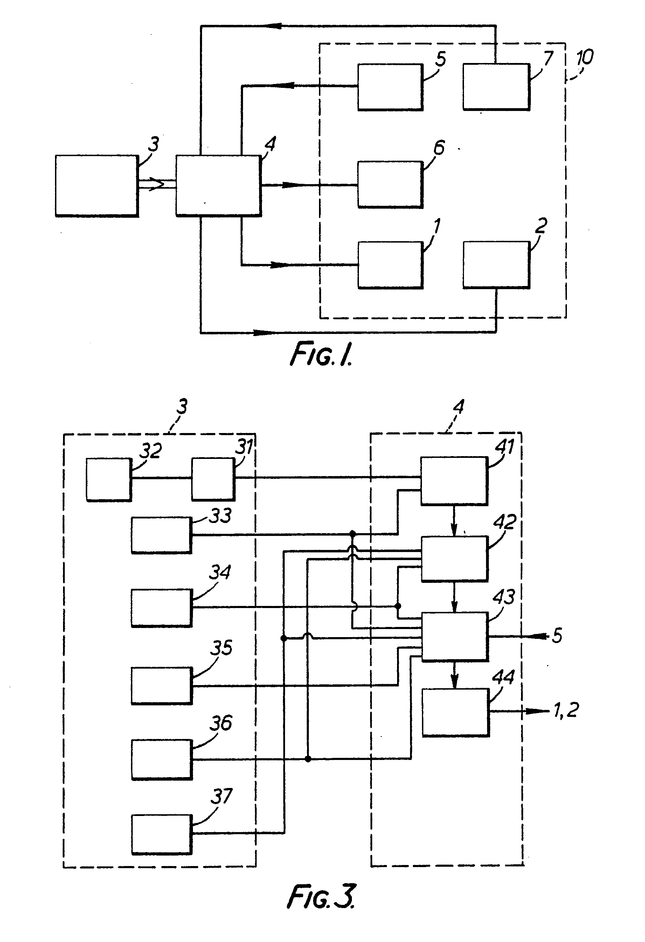

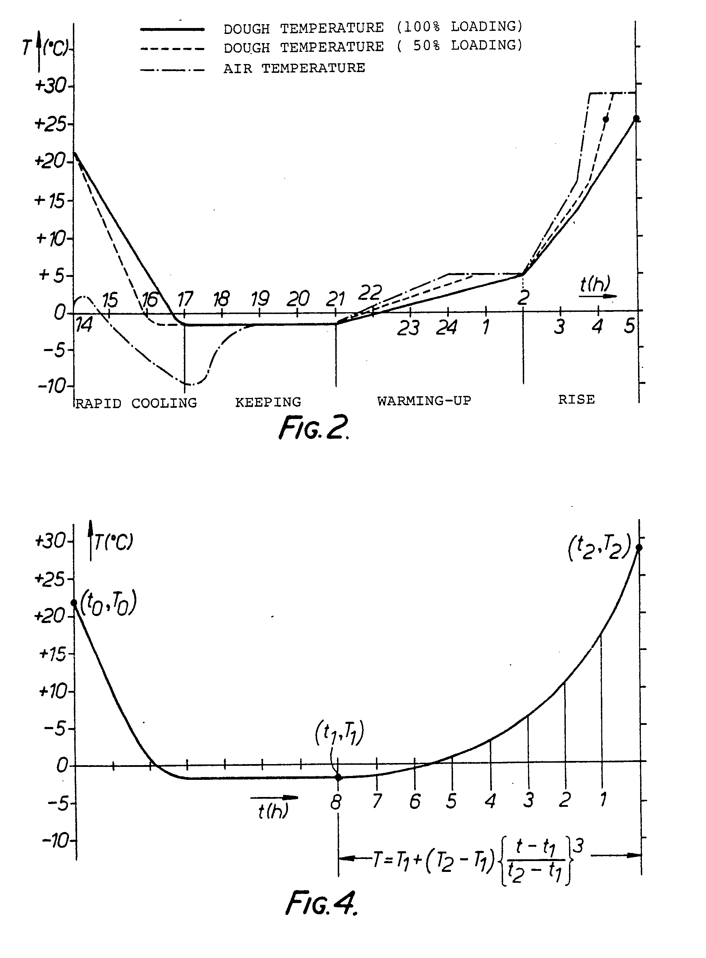

For an explanation of the known apparatus described at the outset as well as of the operation thereof there will now already be made reference to Figures 1 and 2 of the drawing which respectively show a block diagram of a dough conditioning apparatus and graphs of temperature against time both of the pieces of dough and of the air surrounding the pieces of dough in the conditioning chamber during the conditioning.

In Figure 1, reference numeral 1 denotes a cooling unit and reference numeral 2 a heating unit, both units being associated with a conditioning chamber for the conditioning of pieces of dough, the chamber being diagrammatically indicated by the broken line marked with reference numeral 10. Reference numeral 5 indicates a temperature sensing unit also associated with the conditioning chamber 10. Reference numeral 4 indicates a control apparatus which inter alia controls the cooling unit 1 and the heating unit 2, in order to bring about a certain temperature in the conditioning chamber and in particular to do so under the influence of an operating unit 3 which inter alia feeds different time and temperature setting signals to the control apparatus 4. The air temperature or the temperature of the pieces of dough in the conditioning chamber, or both, is or are sensed by the temperature sensing unit 5 which produces a corresponding feedback signal to the control apparatus 4, so that the set temperatures are achieved over the set times.

Further there may be provided, associated with the conditioning chamber, a humidifying/dehumidifying unit 6 for controlling the relative atmospheric humidity in the conditioning chamber, which humidifying/dehumidifying unit 6 is also controlled by means of the operating apparatus 3 and the control apparatus 4 in conformity with the control of the cooling unit 1 and the heating unit 2. In this case, there is further provided a sensing unit 7 for the relative atmospheric humidity within the conditioning chamber, which sensing unit similarly produces a feedback signal to the control apparatus 4 so that the set relative atmospheric humidity is achieved over the desired time in the conditioning chamber.

In other respects the block diagram of Figure 1 applies both to the known apparatus and to the apparatus according to the invention.

In the said known apparatus, the operating apparatus 3 comprises a plurality of time and temperature setting units in the form of potentiometers for temperature setting and a time-accurate master and switch clock and two time relays for time setting. In particular there are provided potentiometers for setting the (rapid) cooling temperature, the keeping temperature, the warming-up temperature, an intermediate temperature for the rise, a final temperature of the rise and a relative humidity.

A first timer relay serves to set the duration of the warming-up and a second timer relay the total duration of the rise. The time-accurate master and switch clock has a special function and has to be tuned to radio time. Using the time-accurate master and switch clock, the number of hours of cooling is set and is related to the true baking time, namely the baking time minus the sum of the warming-up time and the rise time, which are set by the respective time relays.

From the explanation given above it can already be seen that the setting, that is to say the operation, of the operating apparatus 3 is rather cumbersome and this has been confirmed in practice. It must be borne in mind that the operating apparatus is in practice operated by a baker who has to set five different temperatures and possibly the relative atmospheric humidity, in particular during the rise, and must first set the time-accurate master and switch clock to the radio time and then to execute the switching programme; it should also be noted that this switching programme in turn is dependent on the setting of the two time relays, of which the setting is determined, in accordance with the personal preference to the baker, by the quantity of pieces of dough to be conditioned, the difference between, respectively, the conditioning temperature and the warming-up temperature, and the warming-up temperature and rise temperature, and the temperature outside the conditioning chamber. This complicated procedure in practice has the consequence that the baker arranges for the setting units of the operating apparatus 3 to be set once by an expert, in which case a fixed setting is chosen for the maximum power output of the heating unit 2 as a function of the maximum quantity of pieces of dough to be baked. This of course has consequences for those cases wherein the baker has to condition less than the maximum quantity of pieces of dough. This topic will be reverted to at the end of the discussion, which now follows, of the operation of the apparatus according to the block diagram of Figure 1, with reference to Figure 2.

In Figure 2, a continuous line shows the temperature variation of the pieces of dough in the conditioning chamber as a function of time, whilst the dot-dash line shows the variation of the air temperature in the conditioning chamber with time. As may be seen from Figure 2, the baking time is 5.00 a.m. on the morning following the start of the dough conditioning at 2.00 p.m. of the previous day. For rapid cooling of the pieces of dough, the temperature setting unit is used to set, depending on the set keeping temperature, a low temperature of, for example, −10°C.

After the rapid cooling the dough is kept at a temperature of, for example, −2°C, set by means of the temperature setting unit for the keeping period. The time at which the cooling and keeping starts, and the total duration of the cooling and keeping, is set by means of the time-accurate master and switch clock. At the end of the keeping period the cooling unit 1 must be switched off and the heating unit 2 switched on in order, in the first instance, to warm-up the pieces of dough. The final temperature of the warming-up is set by the temperature setting unit for the warming-up and the duration of the warming-up is set by the time relay for the warming-up.

After the warming-up, the dough must be made to rise, and this takes place over the duration set by means of the time relay for rising, and until the final temperature of rising, which is set by means of the temperature setting unit for rising, is achieved.

In the known apparatus it is furthermore possible to divide the rise sequence into two by means of the temperature setting unit for an intermediate rise temperature; in the first sequence, no humidifying/dehumidifying takes place and the heating unit has a defined heat output, and in the second sequence, namely the final sequence, wherein humidifying/-dehumidifying takes place, dependent on the setting unit for the relative atmospheric humidity, and the heating unit has a higher heat output than that mentioned above.

As discussed above, the power output of the heating unit is in practice set with the maximum number of pieces of dough to be conditioned in mind.

The consequence of this when conditioning a smaller quantity of pieces of dough is shown by a broken line in Figure 2. It is easy to see that inter alia the final temperature of the rise and the time at which baking may be carried out is reached earlier whilst the power output is not altered thereby. This leads to a coarse dough structure and to irregularities in the time at which baking starts. It is also clear that not only the lower quantity of pieces of dough can affect the pattern of the curve but so also can be environmental temperature of the conditioning chamber. The latter applies especially to the warming-up period.

Document FR—A—2 501 471 discloses a control system for a fermentation chamber. The chamber allows for successive cooling, keeping at a temperature of about 4°C and subsequent heating to a temperature of about 20°C for fermentation of pieces of dough. Associated with the chamber are heating and cooling units and the control system operates these units in response to the outputs of temperature sensors. The temperatures for keeping the dough and for fermentation of the dough may be set.

This document does not disclose any means to control the cooling and heating unit so that the temperature in the conditioning chamber throughout the warming-up and rising increases to a higher value.

The invention aims to overcome the above-mentioned disadvantage of the known apparatus and to this end provides an apparatus of the type mentioned at the outset which is characterised in that the control apparatus comprises means to control the cooling and heating unit in respect of time that during the warming-up and rise in identical time intervals the temperature in the conditioning chamber is the closest possible approximation to the following function:

$$T=T_1+(T_2-T_1)\cdot\left\{\frac{t-t_1}{t_2-t_1}\right\}^3,$$

where:

T is the temperature to be approximated;

$T_1$ is the set keeping temperature, which is preferably at least 1°C above the solidification point (approximately −4 to −7°C) of the pieces of dough;

$T_2$ is the set final temperature of the rise;

t is the time;

$t_2$ is the set baking time; and

$t_1$ is the time that the duration of warming-up and rise is earlier than $t_2$.

A further object of the present invention is to simplify the operation of the operating apparatus and to improve the adaptation of the conditioning apparatus to the operating conditions in bakeries. The only two time criteria in bakeries which are of importance with reference to the conditioning apparatus are the time after which, following kneading, weighing-out and pre-rise, the pieces of dough can be loaded into the conditioning chamber, namely the loading times, as well as the time at which the pieces of dough have risen sufficiently and can be transferred from the conditioning chamber into the oven, namely the baking time. For this purpose, the conditioning apparatus according to the invention can be provided with time-setting units for accurately fixing the loading time and the baking time. The control apparatus is so set that the pre-cooling of the conditioning chamber has a certain length of time preceding the set loading moment whilst the temperature increase has a certain length of time, preceding the set baking time, and takes place in as small intervals of time as possible.

A further object of the present invention is to make it possible for the baker to set dough conditioning for the entire week by setting one or more loading times and baking times for each separate day and to do so in a simple and effective manner.

The invention will now be explained in more detail with the aid of some embodiments and with reference to the drawing, although the invention is not restricted to these embodiments. In the drawing:

Figure 1 is a block diagram of a dough conditioning apparatus;

Figure 2 shows graphs of the temperature as a function of time, both of the pieces of dough and of the air surrounding the pieces of dough, during the conditioning;

Figure 3 is a detailed block diagram of the operating apparatus 3 and the control apparatus 4 of Figure 1;

Figure 4 shows a graph which indicates the temperature of the pieces of dough as a function of time during the conditioning; and

Figure 5 shows a microcomputer implementation of the invention.

First it is noted, with reference to Figure 1, that associated with the conditioning chamber 10 there may be provided a flow and circulation unit in order to decrease climatic differences in the conditioning chamber.

Figure 3 shows in a greater detail the operating apparatus 3 and the control apparatus 4 of the dough conditioning apparatus of Figure 1 according to a first embodiment of the present invention. The reference numeral 31 indicates an electronic master clock which receives pulses from a pulse generator 32 and which can be set to correspond to the radio time. The reference numeral 33 indicates a time-setting unit for setting the total duration of the warming-up and rise, and it is to be noted that the time-setting unit 33 is not essential since this duration can be set within the range of 6—12 hours, so that this unit 33 should be viewed as a further refinement. The reference numeral 34 indicates a time-setting unit for setting the preferably time-accurate baking time, whilst the reference numeral 37 indicates a time-setting unit for setting the preferably time-accurate loading time. Both in the case of the time-setting unit 34 and 37 a day circuit is located between the electronic master clock and the time base which will be discussed later, so as to switch over in a time-accurate manner from one day to the next, in order that an entire week's programme can be programmed and direct reading-off of the time-accurate loading time and baking time for each day of the week is possible. In a simple embodiment the weekly programme occupies 7 days with, for each day, a loading time and baking time and a duration for the warming-up and rise conjointly. In more extensive dough conditioning apparatuses it is possible, for example, to execute three conditioning processes per day with, of course, three loading times and baking times per day, in which case it is necessary to take care that no inconsistencies, such as overlapping conditioning processes, arise.

Preferably, an "override" button is provided in order, for example, to miss out the warming-up and rise on a free day, so that, for example, conditioning is carried out for 24 hours longer on that day. The reference numeral 35 indicates a temperature setting unit for setting the keeping temperature, and it is to be noted that this also indirectly sets the rapid-cooling temperature since this temperature is preferably a predetermined number of degrees lower than the keeping temperature, whilst the reference numeral 36 indicates a temperature setting unit for the final temperature of the rise. Finally, there can be provided a unit for setting the relative humidity of the air in the conditioning chamber, and it should be noted that preferably humidifying/dehumidifying is only carried out during warming-up and rise. As will be discussed later, warming-up in the broadest sense can comprise thawing-out and warming-up in the narrower sense if the keeping temperature is set below a certain negative temperature. During the rapid cooling, only the cooling unit 1 is activated by the control apparatus 4, whilst during thawing-out only the heating unit 2 is activated by the control apparatus 4. Further, as will be explained later, during warming-up and rise, where necessary, both the cooling unit 1 and the heating unit 2 are activated by the control apparatus 4, in particular to protect the outer surface of the pieces of dough.

It is clear from the above that the operating apparatus 3 is substantially simplified for the user. The only thing which the baker has to do, assuming that the electronic master clock runs correctly, is to set, once, the times, temperatures and relative humidity for each day of the week, in accordance with the production pattern of his business.

As an extra provision it is also possible to light the oven, for baking the risen pieces of dough, a certain time before the baking time, as a function of the latter.

In Figure 3, the broken line frame indicated by the reference numeral 4 shows the control apparatus which, as shown, includes a time base 41 which is connected to the electronic master clock 31 of the operating apparatus 3, as well as to a time circuit 42 which is further connected to the time setting units 37 and 34 for respectively setting the time-accurate loading time and baking time.

The reference numeral 43 indicates a computer unit for computing preferably identical small intervals of time of the increase in temperature of the air and/or of the pieces of dough in the conditioning chamber relative to the temperature thereof in the preceding interval of time. Preferably this is done in accordance with optimum formulae, to be discussed later, for warming-up and rise. Further, the computer unit 43 receives the output signal of the temperature sensing apparatus 5 which indicates the temperature of the air and/or of the pieces of dough.

The input signals of the calculation to be carried out by the computer unit 43 are inter alia received by the temperature setting unit for the keeping temperature 35, with the proviso that preferably this input signal is representative of a temperature which is above the solidification point of the pieces of dough, as well as by the temperature setting unit for the final temperature of the rise, 36, the setting unit for the duration of warming-up and rise conjointly, 33, and the time circuit 42.

Ultimately, the result of the comparison is passed to a power control 44 which for its part is connected to the cooling and heating unit 1, 2 and, optionally, to a mixing and circulating unit.

The computing units 43 and the power control 44 are preferably also provided with means of controlling the humidifying/dehumidifying unit 6 in accordance with a humidity-sensing unit and a setting unit for the relative humidity, as a result of computation and comparison.

Reverting to the warming-up and rise, it has been found that the best result is obtained if the temperature variation during this period approximates as nearly as possible to the following formula:

$$T=T_1+(T_2-T_1)\cdot\left\{\frac{t-t_1}{t_2-t_1}\right\}^3, \qquad (1)$$

where:

T is the temperature to be approximated;

$T_1$ is the set keeping temperature, which is preferably at least 1°C above the solidification point (approximately −4 to −7°C) of the pieces of dough;

$T_2$ is the set final temperature of the rise;

t is the time;

$t_2$ is the set baking time; and

$t_1$ is the time that the duration of warming-up and rise is earlier than $t_2$.

Figure 4 shows the graph of this formula (1) for a total duration of 8 hours of warming-up and rise conjointly. In this graph the point ($t_0$, $T_0$) indicates the start of conditioning.

In a preferred embodiment of the present invention, this graph is transferred to a permanent memory of a microcomputer and this microcomputer more or less continuously controls the power supply to the cooling and heating unit 1, 2 and, preferably, a mixing and circulating unit, it being possible to switch both the heating unit 2 and the mixing and circulation unit in 3 power steps. In this way there is obtained, with the aid of formula (1), a practically smooth temperature curve with time, and moreover the relative atmospheric humidity remains constant at the set value over the entire temperature range. As a result of this forced variation of temperature with time the dough conditioning apparatus becomes completely insensitive to a reduction in the amounts of dough loaded.

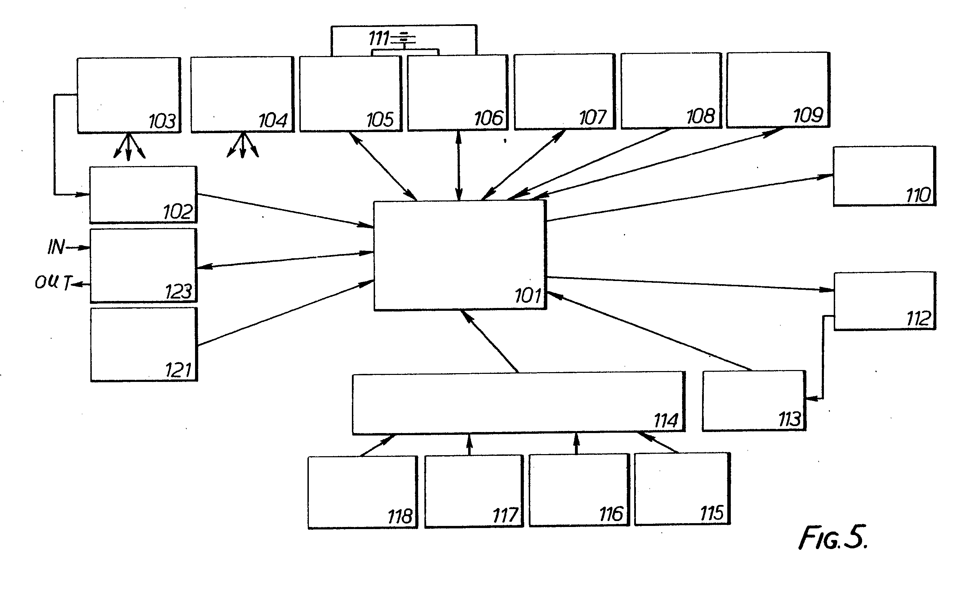

Figure 5 shows the microcomputer in a greatly simplified block diagram.

The reference numeral 101 indicates the central processor of the microcomputer, which central processor ensures the execution of the programmes and provides the computation unit and the further control of the entire system.

For simplicity, the partly necessary coupling units have been omitted in the block diagram of Figure 5. A supply unit 103 is connected via a supply test unit 102 to the central processor 101. The supply unit 103 is preferably a switching supply which provides all the supply voltages required for the microcomputer. In a practical case, the tolerance as regards the input voltage is from 200 V−20% to 240 V+10% so that large voltage variations which may be expected in an industrial environment normally have no effect on the proper working. A switching supply is chosen so that in spite of the broad operating range of the supply as little heat is generated as possible as this is of great importance for the reliability and working life of the electronics. The supply test unit 102 senses the computer as to whether the external supply voltage is extant or whether it threatens to fail so that actions which may be necessary can still be executed before the actual failure of the voltage.

A warming-up and interrupting generator 104 provides all the clock signals and other warming-up signals, and in addition the central processor 101 is interrupted at regular times. A clock and calendar unit 105 keeps the time and date. A battery 111 ensures that the clock and calendar unit 105 continues to run as usual even if the mains voltage is switched off. The reference numerals 106 and 107 indicate two variable memory units wherein all variable data are stored for a short or relatively long time. The variable memory unit 106 is connected to the battery 111 which also provides voltage to the clock and calendar unit 105 if the mains voltage is switched off. As a result, all important data of the dough process control are retained even in the event of a mains fault.

The programme in the programme (permanent) memory unit 108 comprises all instructions for the central processor 101. A "watchdog" unit 109 watches whether the computer is functioning properly. Whenever for any reason the computer, and therefore also the "watchdog", no longer regularly remains "quiet", the "watchdog" unit will signal this while attempting to restore the computer to operation.

A reproduction unit 110 provides the connection of the reproduction apparatuses to the computer. In a practical embodiment of the dough conditioning apparatus according to the invention the operating unit 3 comprises an operating panel with a number of alpha-numeric reproduction character elements in light-emitting diodes. By means of the alpha-numeric reproduction elements the baker can read off the following data: the set day and time with reference to the loading time, the set keeping temperature, the duration of warming-up (including thawing-out) and rise together, the date and time of the set baking time, the set post-rise temperature, to which we will revert later, the set relative atmospheric humidity as well as the actual date and time, the actual measurement temperature (or, as will be discussed later, the averaged measurement temperature or weighted measurement temperature) and the actually measured relative humidity. For this, currently, thirty-six alpha-numeric reproduction elements are used. The said light-emitting diodes are preferably mounted centrally on the operating panel in the form of the graph or curve of Figure 1, together with a picture thereof, the light-emitting diodes being switched on or turned off in accordance with the dough conditioning process. In the practical case referred to, twenty-one light-emitting diodes are employed. Moreover, in addition to the reproduction elements mentioned, other indicator elements, in particular lamps, are employed, these lamps being mounted in function switches which will not be described in more detail here though the "START" and "STOP" switches may be mentioned as examples, the first being usable for starting the rapid cooling after the loading of the dough and the last being usable for terminating the baking.

Reverting to the post-rise temperature, it is noted that at the baking time the risen pieces of dough which are to be baked are transferred from the conditioning chamber to the oven, which is preferably already up to temperature. The conditioning chamber can then be used for the post-rising of fresh pieces of dough, for example at a temperature of about 30°C and a relative humidity of 80%. The last-mentioned pieces of dough are therefore not conditioned pieces of dough.

The dough conditioning is controlled by means of a relay unit 112 whilst a relay test unit 113 enables the computer to check the proper functioning of the relay unit.

By means of an analogue-digital converter unit 114, analogue measure values are converted to binary numbers so that these can be processed by the computer. By means of this analogue/digital converter unit 114, the following are successively connected to the central processor 101: a supply voltage unit 115, a light sensor unit 116, a motor temperature protection unit 117 and a temperature sensing unit 118. By means of the supply unit, the computer regularly controls and registers the minimum and maximum values of the supply voltage. These data can be of importance in the case of service problems. The light sensing unit ensures that the computer receives data concerning the light intensity in the room in which the operating panel of the operating device 3 is located, so that the brightness of the alpha-numeric reproduction elements, light-emitting diodes and filament lamps can be matched to the intensity of the light in the surrounding area. The motor temperature protection unit ensures that the computer receives data concerning possible overheating of the motors of the cooling equipment of the cooling unit 1, so that the latter can then be switched off, this being signalled via a lamp.

Finally, the temperature sensing unit ensures that the computer receives the values of a number of temperatures, of which a small number serve to control the conditioning process and others serve various protection functions. As will be discussed later, in a preferred embodiment both a temperature sensor for the air temperature in the conditioning chamber and a sensor for the temperature of the pieces of dough introduced into the conditioning chamber are provided. The light sensing unit 116 can for example be a light-dependent resistance while the motor temperature protection unit 117 may comprise resistances having a positive temperature coefficient.

A moisture sensing unit 121 ensures that the computer receives data concerning the humidity in the conditioning chamber. The moisture sensing unit 121 can for example be provided with a moisture sensor and a capacity frequency converter so that the weak signal of the moisture sensor, which is conveyed via a long cable from the conditioning chamber to the operating apparatus, is first converted to a conveniently conveyable signal.

Finally, the reference numeral 123 indicates a series coupling unit for input and output signals. Which series coupling unit, in a present-day embodiment of the present invention, is provided with a printer and is used to permit registration, on a printer, of a data required for service purposes, concerning the working of the process regulator.

The microcomputer is programme-controlled, the programme being stored in the programme memory 108.

The automatic dough conditioning comprises the automatic execution of a cycle consisting of cooling pieces of dough for some hours to some days, and thereafter thawing out and warming up the pieces of dough and causing them to rise. During the warming-up and rise the relative humidity is regulated in addition to the temperature. During cooling, the air temperature alone is used as a measure for the temperature to be controlled; during thawing-out, warming-up and rise a combination of the air temperature and the dough temperature is employed for this purpose.

The programming of the parameters which are to be set, by means of operating units on the operating panel of the operating device 3 is carried out for a whole week. The whole course of successive cycles, once programmed, repeats automatically every week. The number of cycles to be programmed per week can be 21, with at most three baking times per day. The programming of the cycles is carried out in a manner which makes inconsistent cycle programming (for example overlapping cycles) completely impossible.

We have touched on some phases of the dough conditioning cycle, namely the pre-cooling, loading, rapid cooling, conditioning, thawing out, warming-up and rise. The programmed cycle moreover provides a warning phase proceeding the pre-cooling and a rest phase following the (post) rise phase.

The parameters to be set per cycle are as follows: the time of loading of the dough pieces, the keeping temperature, total duration of thawing-out, warming-up and rise, the baking time, where relevant the post-rise temperature, and the relative humidity. In the warning phase the baker is warned, if the process was previously in the post-rise phase of the preceding cycle, that the dough conditioning apparatus must switch off the post-rise phase functions in order to change over to pre-cooling. In the pre-cooling phase the conditioning chamber is cooled to 7°C below the temperature set for keeping the dough. At the moment set for this purpose, the cycle continues with the loading phase. The baker can now introduce the pieces of dough, which are to be cooled, into the conditioning chamber. After pressing the "START" button, the dough conditioning apparatus passes into the rapid cooling phase wherein the air temperature of the conditioning chamber is cooled once again to a temperature which is, for example, 7°C lower than the temperature set for keeping the dough. This has the effect that the pieces of dough rapidly come to a low temperature. As soon as this is achieved, the cycle continues with the keeping phase wherein the temperature is kept at the value set for keeping the dough. In this embodiment heating, humidifying or drying are not employed in the pre-cooling up to and including the keeping phases. Temperature control is thus achieved solely by means of cooling. Further, only the air temperature is controlled. The thawing-out/warming-up/rise phase starts at the number of hours set for this purpose before the time corresponding to the end of the rise. The temperature is first brought as quickly as possible above a certain negative temperature of −3°C. This has the effect that the pieces of dough, if they are frozen, are now thawed out as quickly as possible. Thereafter the temperature is increased, first slowly and then progressively more rapidly, to the desired baking temperature. The relative humidity is controlled from 0°C onward. Between, for example, 0°C and 5°C only the drying function is used for this purpose; from 5°C onwards, the humidifying function is also employed. The temperature course which is followed in the thawing-out/warming-up/rise phase is in principle the closest possible approximation to formula (1) and it should be noted that a further optimisation of this temperature control will be discussed later. At the time set for this purpose, the cycle follows, where appropriate, with the post-rise phase for fresh pieces of dough. In this phase the temperature and the humidity are kept at the value set for them. In the thawing-out/warming-up rise phase and post-rise phase warming, cooling, humidifying or drying are employed where appropriate, with the stated restrictions. In these phases, a combination of the air temperature and the dough temperature is preferably employed as a measure of the temperature. In this way it is better possible to ensure that the pieces of dough also come to the correct temperature from within.

The phases referred to will now be discussed in more detail.

The warning phase starts several minutes before the time which has been programmed as the starting time for the loading phase, and during this phase the system passes to the pre-cooling phase if the previous phase was not the post-rise phase. If the previous phase was the post-rise phase, the system passes to the pre-cooling phase when one of the following occurs: several minutes before the time programmed as the starting time for the loading phase or pressing of the "STOP" button. The temperature and humidity control in this phase is the same as in the post-rise phase of the cycle preceding the present cycle.

The starting time of the pre-cooling phase is the time at which the warning phase has come to an end, whilst the transition to the loading phase is at the time which has been programmed as the starting time for the loading phase. In the pre-cooling phase, rapid cooling takes place to a temperature which is, for example, 7°C lower than the temperature programme for the keeping phase. The measurement temperature is the air temperature in the conditioning chamber.

The loading phase commences at the starting time programmed for the loading phase, whilst this system passes to the rapid cooling phase on occurrence of one of the following conditions: several minutes after the time programmed as the starting time of the loading phase or pressing of the "START" button. In the loading phase, the rapid cooling takes place in the same manner as in the pre-cooling phase and once again the measured temperature is the air temperature. The starting phase of the rapid-cooling phase is the time at which the loading phase ends, whilst the system changes to the keeping phase on occurrence of one of the following conditions: several minutes after the time programmed as the starting time of the keeping phase, or reaching of the rapid-cooling temperature which is 7°C lower than the keeping temperature. Here again the measurement temperature is the air temperature.

The starting time of the keeping phase is the time at which the rapid-cooling phase comes to an end, whilst the system passes to the thawing-out/warming-up rise phase a number of hours equal to the programmed duration of the last-mentioned phase prior to the starting time of the time programmed for the post-rise phase. In this phase, cooling to the set keeping temperature is employed, the measurement temperature being the air temperature.

The thawing-out/warming-up/rise phase starts a number of hours equal to the programmed length of the said phase before the time programmed as the starting time of the post-rise phase, while the system changes to the post-rise phase at the time programmed as the starting time for the post-rise phase. The temperature and moisture control as well as the temperature of measurement in this phase will be discussed in more detail below.

The post-rise phase starts at the time programmed as the starting time for the post-rise phase. The system changes to the rest phase after pressing the "STOP" button, whilst it passes to the warning phase of the next cycle several minutes before the time programmed as the starting time of the loading phase of the following cycle. In this phase, the temperature is controlled in accordance with the temperature programmed for the post-rise phase, whilst the humidity is controlled in accordance with the relative humidity programmed for the post-rise phase. The measurement temperature of this phase will also be discussed in more detail below. Finally, the post-rise phase ends and the rest phase starts on pressing the "STOP" button, whilst the system changes to the warning phase several minutes before the time programmed as the starting time for the loading phase of the next cycle. The rest phase is indicated by a light-emitting diode being alight.

Though in the description of the phases reference was made to the transition from one phase to the next phase, this in reality takes place in a different manner. In reality, with the aid of the set programme, the time and the recording of certain occurrences (pressing-in the "STOP" button or pressing-in the "START" button and reaching of the reference temperature), a completely fresh determination takes place each time as to in which phase of which cycle the process should be. This phase and cycle is then selected. This has the effect that independently of temporary disturbances (voltage failure, computer fault etc.) or of temporary programme changes or alterations of the date/time clock the phase corresponding to the data set at that instant is selected at all times.

The setting of the cycle parameters is for example carried out as follows: baking time, post-rise temperature, relative humidity, loading time, keeping temperature and duration of the thawing-out/warming-up/rise phase, while setting of parameters outside the limits laid down for these is blocked or corrected by the computer.

In the thawing-out/warming-up/rise phase, the pieces of dough are first thawed out, and thereafter the temperature must increase, first slowly and thereafter progressively more rapidly. Preferably, the temperature course is determined by formula (1).

If however the set keeping temperature is lower than or equal to a set negative temperature, especially −3°C, the following formula is employed in place of formula (1):

$$T=-k+(T_2+k)\cdot\left\{\frac{t-t_1}{t_2-t_1}\right\}^3 \qquad (2)$$

wherein k is a constant, in this case 3.

In all cases, the cooling and heating unit 1, 2 is switched on to allow the measured temperature always to approach the temperature according to formulae 1 and 2 as closely as possible. In all cases except for the thawing-out/warming-up/rise phase and the post-rise phase the measured air temperature is used as the measurement temperature. In the phase mentioned, however, the measurement temperature is preferably determined from a combination of the measured air temperature and the measured dough temperature.

This can be done by taking as the measurement temperature a temperature wherein the air temperature $T_a$ and dough temperature $T_d$ are weighted in accordance with the following formula:

$$T_w=aT_a+(1-a)T_d \qquad (3)$$

where a is a constant, preferably 1/2. This has the effect that the air temperature is increased according to how much colder internally the pieces of dough are.

In order now to prevent the air temperature from rising too much, which would cause the outer edge of the dough to suffer, it is necessary to take measures to ensure that the air temperature is increased above the temperature according to formulae (1) and (2) only by at most a certain number of degrees centigrade, for example 5°C, which is an average value that has proved very satisfactory in practice.

For this reason, it is preferred to choose different values for the measurement temperature under different conditions, in accordance with the following formulae:

$$T_m=T_a+c \text{ for } T_w>T_a+c; \qquad (4)$$

$$T_m=T_w \text{ for } T_a+c\geq T_w\geq Ta-c; \qquad (5)$$

and

$$T_m=T_a-c \text{ for } T_w<T_a-c, \qquad (6)$$

where:

c is a constant and for example has the value 5.

In the formulae (3)—(6):

$T_a$ is the air temperature in the conditioning chamber;

$T_d$ is the temperature of the pieces of dough in the conditioning chamber;

$T_w$ is the weighted temperature; and

$T_m$ is the measurement temperature.

The reproduction unit 110 preferably shows the measurement temperature ($T_m$). The unit can however be provided with a pushbutton so that on pressing the button the dough temperature and air temperature are indicated alternately, and a lamp can be provided in the pushbutton so that if the lamp is on it signals that the dough temperature is being shown whilst if the lamp is out it signals that the air temperature is being shown.

## Claims

1. Dough conditioning apparatus comprising a conditioning chamber for the pieces of dough to be conditioned, the conditioning comprising at least in sequence the rapid cooling of the pieces of dough loaded into the conditioning chamber, in order to stop the rise thereof, the keeping of the pieces of dough for a defined time at a defined temperature and the warming-up and causing to rise of the pieces of dough so that they may thereafter be baked, which dough conditioning apparatus is further provided with a cooling and heating unit associated with the conditioning chamber, an operating apparatus with at least a first and second temperature setting unit for respectively setting the keeping temperature and final temperature of the rise, and a temperature sensing unit associated with the conditioning chamber for at least sensing the air temperature in the conditioning chamber, and a control apparatus for at least controlling the cooling and heating unit at least in response to an output signal of the temperature sensing unit, characterised in that the control apparatus comprises means to control the cooling and heating unit in respect of time that during the warming-up and rise in identical time intervals the temperature in the conditioning chamber is the closest possible approximation to the following function:

$$T=T_1+(T_2-T_1)\cdot\left\{\frac{t-t_1}{t_2-t_1}\right\}^3, \qquad (1)$$

where:

$T$ is the temperature to be approximated;

$T_1$ is the set keeping temperature, which is preferably at least 1°C above the solidification point (approximately −4 to −7°C) of the pieces of dough;

$T_2$ is the set final temperature of the rise;

$t$ is the time;

$t_2$ is the set baking time; and

$t_1$ is the time that the duration of warming-up and rise is earlier than $t_2$.

2. Dough conditioning apparatus according to Claim 1, but modified in that when the dough is kept below a certain negative temperature (−k°C) the warming-up comprises thawing-out and warming up and the function for the condition $T_1 \leqslant -k$ is as follows:

$$T=-k+(T_2+k)\cdot\left\{\frac{t-t_1}{t_2-t_1}\right\}^3$$

3. Dough conditioning apparatus according to Claim 2, characterised in that k=3.

4. Dough conditioning apparatus according to one of the preceding claims, characterised in that the temperature sensing unit comprises a first and a second temperature sensor for respectively sensing the temperature of the air in the conditioning chamber ($T_a$) and the temperature of the pieces of dough ($T_d$), as well as a weighting unit which produces, as the output signal of the temperature sensing unit, a signal ($T_w$) which represents:

$$T_w=aT_a+(1-a)T_d$$

where a is a constant.

5. Dough conditioning apparatus according to Claim 4, characterised in that a=1/2.

6. Dough conditioning apparatus according to Claim 4 or 5, characterised in that the temperature sensing unit is furthermore provided with a comparison unit which in each time interval compares the air temperature with the desired temperature and in the case of too large a difference (⩾c°C) so controls the temperature sensing unit that the latter produces, as the output signal, a signal ($T_m$) which represents:

$$T_m=T_a+c \quad \text{for } T_w>T_a+c;$$

$$T_m=T_w \quad \text{for } T_a+c \geqslant T_2 \geqslant T_w-c;$$

and

$$T_m=T_a-c \quad \text{for } T_w<T_a-c.$$

7. Dough conditioning apparatus according to Claim 6, characterised in that c=5.

8. Dough conditioning apparatus according to one of the preceding claims, characterised in that the operating apparatus is provided with a weekly programme unit for programming the control apparatus.

9. Dough conditioning apparatus according to one of the preceding claims, characterised in that the control apparatus is provided with a microcomputer.

## Patentansprüche

1. Teigkonditioniervorrichtung mit einem Konditionierraum für die zu konditionierenden Teigstücke, wobei das Konditionieren zumindest, nacheinander, das schnelle Abkühlen der in den Konditionierraum eingebrachten Teigstücke zwecks Unterbrechung ihrer Gärung, das Konservieren der Teigstücke, für eine bestimmte Zeitdauer, auf einer bestimmten Temperatur, sowie das Anwärmen der Teigstücke und das Gären derselben für ein anschliessendes Verbacken umfasst, wobei die Teigkonditioniervorrichtung desweiteren mit einer dem Konditionierraum zugeordneten Kühl- und Heizeinheit, einem Stellgerät mit mindestens einer ersten und einer zweiten Temperatureinstelleinheit für das Einstellen der Konservierungs-, bzw. der Endtemperatur für das Gären, einer dem Konditionierraum zugeordneten Temperaturfühlereinheit mindestens zum Erfassen der Temperatur im Konditionierraum, und ein Steuergerät um zumindest die Kühl- und Heizeinheit zumindest als Antwort auf ein Ausgangssignal der Temperaturfühlereinheit zu steuern, versehen ist, dadurch gekennzeichnet, dass das Steuergerät Mittel umfasst, um die Kühl- und Heizeinheit so in Funktion der Zeit zu steuern, dass während dem Anwärmen und dem Gären die Temperatur im Konditionierraum in identischen Zeitintervallen eine möglichst nahe Approximation an die folgende Funktion ist:

$$T=T_1+(T_2-T_1)\cdot\left\{\frac{t-t_1}{t_2-t_1}\right\}^3, \quad (1)$$

worin:

T die angestrebte Temperatur ist;

$T_1$ die eingestellte Konservierungstemperatur ist, welche vorzugsweise mindestens 1°C über dem Erstarrungspunkt (etwa −4 bis −7°C) der Teigstücke liegt;

$T_2$ die eingestellte Endtemperatur für die Gärung ist;

t die Zeit ist;

$t_2$ die eingestellte Backbeginnzeit ist, und

$t_1$ die Zeit ist, welche um die Dauer des Anwärmens und des Gärens vor $t_2$ liegt.

2. Teigkonditioniervorrichtung nach Anspruch 1, dahingehend angewandelt, dass, wenn der Teig unterhalb einer bestimmten negativen Temperatur (−k°C) aufbewahrt wird, das Anwärmen Auftauen und Anwärmen umfasst, und die Funktion für die Bedingung $T_1 \leq -k$ folgendermassen

$$T=-k+(T_2+k)\cdot\left\{\frac{t-t_1}{t_2-t_1}\right\}^3 .$$

3. Teigkonditioniervorrichtung nach Anspruch 2, dadurch gekennzeichnet, dass k=3.

4. Teigkonditioniervorrichtung nach einem beliebigen der Ansprüche 1 bis 3, dadurch gekennzeichnet, dass die Temperaturfühlereinheit einen ersten und einen zweiten Temperaturfühler für das Erfassen der Lufttemperatur im Konditionierraum ($T_a$), bzw. der Temperatur der Teigstücke ($T_d$), sowie eine Gewichtungseinheit umfasst,

welche als Ausgangssignal der Temperaturfühlereinheit ein Signal ($T_w$) erzeugt, welches

$T_w=aT_a+(1-a)T_d$ darstellt,

worin a eine Konstante ist.

5. Teigkonditioniervorrichtung nach Anspruch 4, dadurch gekennzeichnet, dass a=1/2.

6. Teigkonditioniervorrichtung nach den Ansprüchen 4 oder 5, dadurch gekennzeichnet, dass die Temperaturfühlereinheit desweiteren mit einer Vergleichseinheit ausgerüstet ist, welche in jedem Zeitintervall die Lufttemperatur mit der gewünschten Temperatur vergleicht und im Falle einer zu grossen Differenz (≥c°C) die Temperaturfühlereinheit so steuert, dass letztere als Ausgangssignal ein Signal ($T_m$) erzeugt, welches darstellt:

$T_m=T_a+c$ für $T_w>T_a+c$;
$T_m=T_w$ für $T_a+c \geq T_w \geq T_a-c$; und
$T_m=T_a-c$ für $T_w<T_a-c$.

7. Teigkonditioniervorrichtung nach Anspruch 6, dadurch gekennzeichnet, dass c=5.

8. Teigkonditioniervorrichtung nach einem beliebigen der Ansprüche 1 bis 7, dadurch gekennzeichnet, dass das Stellgerät mit einer Wochenprogrammeinheit ausgerüstet ist zum Programmieren des Steuergerätes.

9. Teigkonditioniervorrichtung nach einem beliebigen der Ansprüche 1 bis 8, dadurch gekennzeichnet, dass das Steuergerät mit einem Mikrocomputer versehen ist.

**Revendications**

1. Appareil de conditionnement pour pâte comprenant une chambre de conditionnement pour les pâtons à conditionner, le conditionnement comprenant au moins, dans l'ordre, le refroidissement rapide des pâtons introduits dans la chambre de conditionnement afin d'arrêter leur fermentation, la conservation des pâtons, pour une période déterminée, à une température déterminée, et le réchauffement avec la fermentation des pâtons afin de pouvoir les cuire ensuite, ledit appareil de conditionnement étant en outre pourvu d'une unité de refroidissement et de réchauffement associée à la chambre de conditionnement, d'un appareil de manoeuvre avec au moins une première et une seconde unité de réglage de la température pour ajuster la température de conservation et la température de fermentation respectivement, d'une unité de sondage pyrométrique associée à la chambre de conditionnement pour sonder au moins la température de l'air à l'intérieur de la chambre de conditionnement, et d'un appareil de commande pour commander au moins l'unité de refroidissement et de réchauffement au moins en réponse à un signal de sortie de l'unité de sondage pyrométrique, caractérisé en ce que l'appareil de commande comprend des moyens pour commander l'unité de refroidissement et de réchauffement en fonction du temps, de façon à ce que pendant le réchauffement et la fermentation, la température dans la chambre de conditionnement est, dans des intervalles de temps identiques, une approximation aussi proche que possible de la fonction suivante:

$$T=T_1+(T_2-T_1)\cdot\left\{\frac{t-t_1}{t_2-t_1}\right\}^3 \quad (1),$$

dans laquelle:

T est la température à approcher;

$T_1$ est la température ajustée pour la conservation qui est de préférence 1°C au-dessus du point de solidification (environ −4 à −7°C) des pâtons;

$T_2$ est la température ajustée pour la fermentation;

t est le temps;

$t_2$ est le temps ajusté pour la cuisson, et

$t_1$ est le temps qui se trouve avant $t_2$ pour la durée du réchauffement et de la fermentation.

2. Appareil de conditionnement pour pâte selon la revendication 1, mais modifié en ce sens que si la pâte est conservée en dessous d'une certaine température négative (−k°C), le réchauffement comprend le dégel et le réchauffement et la fonction pour la condition $T_1 \leqslant -k$ est la suivante:

$$T=-k+(T_2+k) \cdot \left\{\frac{t-t_1}{t_2-t_1}\right\}^3$$

3. Appareil de conditionnement pour pâte selon la revendication 2, caractérisé en ce que k=3.

4. Appareil de conditionnement pour pâte selon l'une quelconque des revendications précédentes, caractérisé en ce que l'unité de sondage pyrométrique comprend un premier et un second capteur de la température pour capter la température de l'air dans la chambre de conditionnement ($T_a$) et la température des pâtons ($T_d$), respectivement, ainsi qu'une unité de pondération qui produit, comme signal de sortie de l'unité de sondage pyrométrique, un signal ($T_w$) qui présente:

$$T_w=aT_a(1-a)T_d$$

où a est une constante.

5. Appareil de conditionnement pour pâte selon la revendication 4, caractérisé en ce que a=1/2.

6. Appareil de conditionnement pour pâte selon les revendications 4 ou 5, caractérisé en ce que l'unité de sondage pyrométrique est en outre pourvue d'une unité de comparaison qui, en chaque intervalle de temps, compare la température de l'air avec la température désirée et, dans le cas d'une trop grande différence (≥c°C) commande l'unité de sondage pyrométrique de façon à ce que celle-ci produise, comme signal de sortie, un signal ($T_m$) qui représente:

$$T_m=T_a+c \text{ pour } T_w>T_a+c;$$
$$T_m=T_w \text{ pour } T_a+c \geqslant T_w \geqslant Ta-c; \text{ et}$$
$$T_m=T_a-c \text{ pour } T_w<T_a-c.$$

7. Appareil de conditionnement pour pâte selon la revendication 6, caractérisé ce que c=5.

8. Appareil de conditionnement pour pâte selon l'une quelconque des revendications précédentes, caractérisé en ce que l'appareil de manoeuvre est pourvu d'une unité de programme hebdomadaire pour programmer l'appareil de commande.

9. Appareil de conditionnement pour pâte selon l'une quelconque des revendications précédentes, caractérisé en ce que l'appareil de commande est pourvu d'un micro-ordinateur.

3
4
5
7
10
6
1
2

FIG. 1.

3
4
32
31
41
33
42
34
43
5
35
44
1,2
36
37

FIG. 3.

DOUGH TEMPERATURE (100% LOADING)
DOUGH TEMPERATURE ( 50% LOADING)
AIR TEMPERATURE
T (°C)
+30
+25
+20
+15
+10
+5
0
-5
-10
14
15
16
17
18
19
20
21
22
23
24
1
2
3
4
5
t(h)
RAPID COOLING
KEEPING
WARMING-UP
RISE


FIG. 2.

T(°C)
+30
+25
+20
+15
+10
-5
0
-5
-10
$(t_0,T_0)$
$(t_1,T_1)$
$(t_2,T_2)$
t(h)
8
7
6
5
4
3
2
1
$T = T_1 + (T_2 - T_1)\left\{\frac{t - t_1}{t_2 - t_1}\right\}^3$


FIG. 4.

101
102
103
104
105
106
107
108
109
110
111
112
113
114
115
116
117
118
121
123
IN
OUT

Fig. 5.